# FASCICULE DE BREVET EUROPEEN

(11) **EP 3 814 616 B1**
(45) Date de publication et mention de la délivrance du brevet: **28.09.2022**
(21) Numéro de dépôt: 19750135.6
(22) Date de dépôt: 28.06.2019
(51) Int. Cl.: F02C 7/266, F23R 3/06

(54) **DISPOSITIF DE GUIDAGE DANS UNE CHAMBRE DE COMBUSTION**
LEITVORRICHTUNG IN EINER BRENNKAMMER
GUIDING DEVICE IN A COMBUSTION CHAMBER

(30) Priorité: 29.06.2018 FR 1855984
(43) Date de publication de la demande: 05.05.2021
(73) Titulaire: SAFRAN AIRCRAFT ENGINES, 75015 Paris (FR)
(72) Inventeur: BUNEL, Jacques Marcel Arthur, 77550 Moissy-Cramayel (FR); LEFEBVRE, Alexandre Eric, 77550 Moissy-Cramayel (FR)
(74) Mandataire: Ernest Gutmann - Yves Plasseraud S.A.S.
(86) Numéro de dépôt international: PCT/FR2019/051613
(87) Numéro de publication internationale: WO 2020/002858

(56) Documents cités:
- EP-A1- 1 770 332
- FR-A1- 2 988 436
- US-A1- 2015 354 818

## Description

### INTRODUCTION

La présente invention concerne un dispositif de guidage d'un élément, tel qu'une bougie d'allumage ou un injecteur de carburant, s'étendant dans un orifice ou au voisinage d'un orifice d'une paroi de chambre de combustion de turbomachine.

Une chambre de combustion, annulaire, de turbomachine est délimitée par deux parois de révolution coaxiales qui s'étendent (par rapport à l'axe 34 ci-après) l'une à l'intérieur de l'autre et qui sont reliées entre elles à leurs extrémités amont par une paroi annulaire de fond de chambre.

La paroi de fond de chambre comporte des orifices de montage de moyens d'injection d'un mélange d'air et de carburant à l'intérieur de la chambre, l'air provenant d'un compresseur de la turbomachine et le carburant étant amené par des injecteurs.

L'amont est le côté par où le mélange d'air et de carburant arrive dans la chambre annulaire de combustion.

(Par rapport à l'axe 38 ci-après), les moyens d'injection, ou injecteurs, s'étendent sensiblement radialement depuis leurs extrémités externes fixées sur un carter externe de la chambre, jusqu'à leurs têtes alignées axialement avec les orifices de la paroi de fond de chambre.

La paroi externe de révolution de la chambre comporte au moins un orifice de passage d'une extrémité d'une bougie d'allumage dont l'autre extrémité peut être fixée sur un carter externe de la chambre, cette bougie étant destinée à amorcer la combustion du mélange d'air et de carburant dans la chambre.

En fonctionnement de la turbomachine, les parois de la chambre de combustion se dilatent thermiquement, ce qui engendre des déplacements relatifs entre la paroi externe de la chambre et la bougie d'allumage et entre la paroi de fond de chambre et les injecteurs de carburant.

Pour compenser et autoriser ces déplacements relatifs, on utilise des dispositifs de guidage de la bougie et des injecteurs qui comprennent chacun une bague flottante et une bride sensiblement coaxiales montées l'une à l'intérieur de l'autre. La bague est destinée à être traversée axialement par l'élément et comporte un rebord externe guidé transversalement dans une gorge intérieure de la bride. La bride est destinée à être fixée à un bord de l'orifice de la paroi de la chambre de combustion. Cette bride comprend une douille pourvue d'un bord tombé où la douille est brasée ou soudée avec une coupelle, de façon à définir entre elles ladite gorge annulaire. Le dispositif présente au moins une direction transversale privilégiée de déplacement de la bague.

La demande de brevet EP-A1-1 770 332 de la demanderesse décrit un dispositif de guidage de ce type. Les déplacements relatifs entre la paroi externe de la chambre et la bougie ont principalement lieu dans une direction parallèle à l'axe longitudinal de la chambre. En fonctionnement, la bride solidaire de la paroi de la chambre est donc essentiellement déplacée dans cette direction longitudinale par rapport à la bague de guidage de la bougie portée par le carter externe. Les déplacements relatifs de la bague dans la gorge de la bride dans les autres directions transversales sont de plus faibles amplitudes. La direction axiale ou longitudinale est donc la direction privilégiée de déplacement de la bague de guidage de la bougie d'allumage par rapport à la bride portée par la chambre. Les déplacements relatifs entre la paroi de fond de chambre et les injecteurs ont principalement lieu dans des directions radiales par rapport à l'axe longitudinal de la chambre, la direction privilégiée de déplacement relatif de la bague montée autour d'un injecteur est donc une direction radiale par rapport à l'axe longitudinal de la chambre. Les documents US 2015/354818 A1 et FR 2 988 436 A1 divulguent également de tels dispositifs de guidage.

Dans la technique actuelle, les deux pièces, coupelle et bride, formant la bride d'un dispositif de guidage sont fixées l'une sur l'autre à leurs périphéries externes par un ou des cordons de soudure qui s'étendent sur tout le pourtour de la douille.

L'expression soudure couvre tant les brasures que les réelles soudures.

Bien que l'opérateur en charge de la réalisation de cette soudure prenne un maximum de précautions pour les effectuer, les cordons de soudure peuvent déborder dans la gorge annulaire de guidage de la bague et boucher localement la périphérie externe de cette gorge, réduisant ou empêchant ainsi les débattements de la bague en direction transversale dans la gorge de la bride. L'opération de soudage des pièces de la bride est donc délicate à réaliser et ne permet pas de contrôler ces débordements de soudure. De plus, il existe un risque de blocage du dispositif et/ou de dégradation des soudures, voire de rupture, à chaque fois que le rebord de la bague vient en contact avec un cordon de soudure qui déborde dans la gorge de la bride.

L'invention a notamment pour but d'apporter une solution simple, efficace et économique à ce problème.

Aussi est-il proposé un dispositif de guidage d'un élément dans un orifice d'une paroi de chambre de combustion de turbomachine, le dispositif comprenant une bague flottante et une bride sensiblement coaxiales montées l'une à l'intérieur de l'autre, la bague étant destinée à être traversée axialement (axe dit 520a) par un élément et comportant un rebord externe guidé transversalement (audit axe 520a) dans une gorge annulaire intérieure de la bride, laquelle est destinée à être fixée à un bord de l'orifice de la paroi de la chambre de combustion, la bride comprenant une douille pourvue d'un bord tombé où la douille est brasée ou soudée avec une coupelle, de façon à définir, entre elles ladite gorge, le dispositif présentant au moins une direction transversale privilégiée de déplacement de la bague. Dans ce dispositif :
- , parallèlement audit axe (520a), entre les soudures ou brasures et la trajectoire du rebord de la bague quand celle-ci est déplacée par rapport à la douille dans la direction privilégiée, un espace intermédiaire est réservé, en prolongement de ladite gorge, et
- les soudures ou brasures débordent dans ledit espace intermédiaire, de sorte que ces soudures ou brasures se situent en dehors de ladite trajectoire du rebord de la bague.

Selon l'invention et comme défini en revendication 1,
le dispositif se caractérise en outre en ce que ledit espace intermédiaire s'étend autour d'une partie de la coupelle transversalement audit axe (520a), entre ladite partie de la coupelle et le bord tombé.

La solution est simple à réaliser et économique. Avec la solution de l'invention, lesdites soudures ou brasures peuvent ne déborder que dans ledit espace intermédiaire, et donc uniquement dans celui-ci.

C'est aussi une manière d'écarter très efficacement de ladite trajectoire l'espace intermédiaire, donc le débordement des soudures ou brasures.

Le décalage axial recherché sera atteint, autour de ladite partie de la coupelle.

Une manière efficace de réaliser cet espace intermédiaire, en évitant de déformer la douille pourra consister à prévoir que la coupelle soit étagée par l'intermédiaire d'un épaulement pourvu d'un rebord externe par lequel la coupelle aura été brasée ou soudée avec une extrémité axialement allongée du bord tombé.

Ainsi, l'épaulement fera obstacle ou écran entre la zone de la trajectoire du rebord de la bague et la zone de débordement.

En outre, plutôt que de conformer la coupelle avec par exemple une forme périphérique en U inversé, orienté, parallèlement audit axe (520a), vers ladite gorge, on pourra préférer que, parallèlement à cet axe, la hauteur (H10 ci-après) dudit bord tombé soit au moins égale à la hauteur (H30 ci-après) dudit débordement augmenté de l'épaisseur duit rebord et d'un jeu J (ci-après) permettant au rebord précité de se déplacer dans la gorge intérieure de la bride.

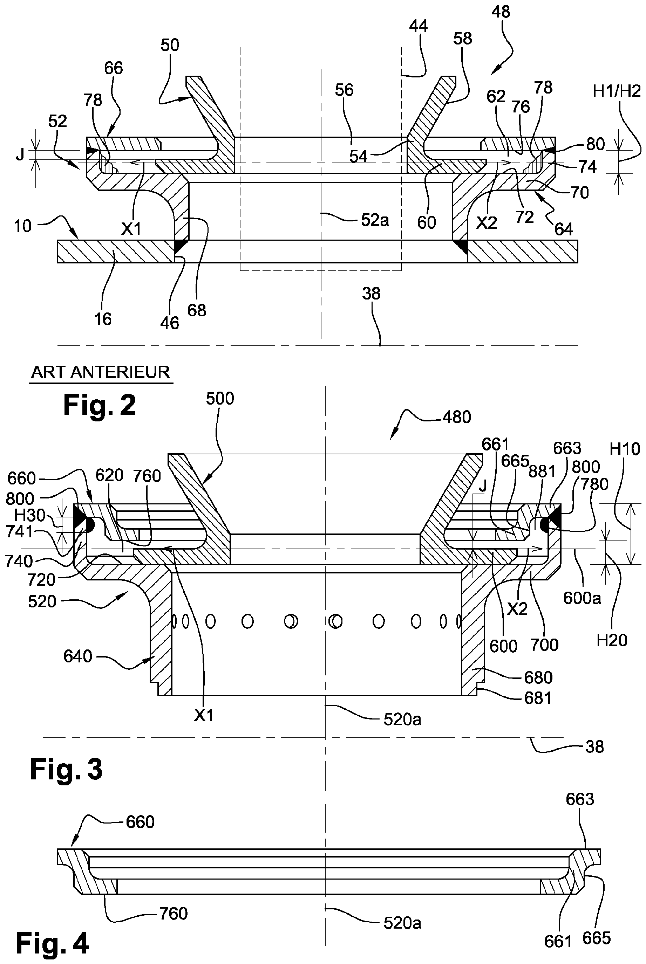

Ainsi, par rapport à une situation connue comme sur la figure 2 présentée ci-après, on aura « simplement » rehaussé le bord tombé, suivant ledit axe (520a).

Et, si, transversalement audit axe (520a), le rebord éloigne du bord tombé l'épaulement, en tant que dite partie de la coupelle, en créant ainsi ledit espace intermédiaire réservé au débordement des soudures ou brasures, on pourra obtenir, transversalement à cet axe 520a, le compromis le plus approprié entre le volume optimal pour le débordement et le plus faible encombrement.

Est aussi concernée par l'invention une chambre de combustion de turbomachine à gaz pour aéronef, la chambre de combustion s'étendant annulairement autour d'un axe (34 ci-après) et étant pourvue d'un dispositif de guidage comme précité, avec tout ou partie des caractéristiques mentionnées, ce dispositif de guidage définissant un guide bougie, l'élément guidé dans l'orifice de ladite paroi de la chambre de combustion étant une bougie qui communique avec un volume intérieur de la chambre de combustion par cet orifice, la paroi dans laquelle ledit orifice est formé étant une paroi annulaire radialement externe par rapport audit axe (34).

En particulier, cette chambre de combustion pourra comprendre en outre une paroi annulaire de fond de chambre reliant ladite paroi annulaire radialement externe à une paroi annulaire radialement interne par rapport audit axe (34), ladite paroi annulaire de fond de chambre comportant des orifices de montage de systèmes d'injection d'un mélange d'air et de carburant dans la chambre de combustion.

Ainsi, une chambre de combustion performante pourra être proposée.

L'invention sera si nécessaire mieux comprise et d'autres détails, caractéristiques et avantages pourront apparaître à la lecture de la description suivante faite à titre d'exemple non limitatif en référence aux dessins annexés.

### BREVE DESCRIPTION DES FIGURES

- la figure 1 est une demi-vue schématique en coupe axiale (axe 38 ci-après) d'un diffuseur et d'une chambre de combustion d'une turbomachine aéronautique ;
- la figure 2 est une vue schématique, en coupe axiale (axe 38 ci-après), d'un dispositif de guidage selon la technique antérieure ;
- la figure 3 est une vue schématique, en coupe axiale (axe 38 ci-après), d'un dispositif de guidage selon l'invention ;
- la figure 4 est une coupe axiale (axe 38 ci-après) d'une coupelle annulaire pouvant être montée sur la solution de la figure 3.

### DESCRIPTION DETAILLEE

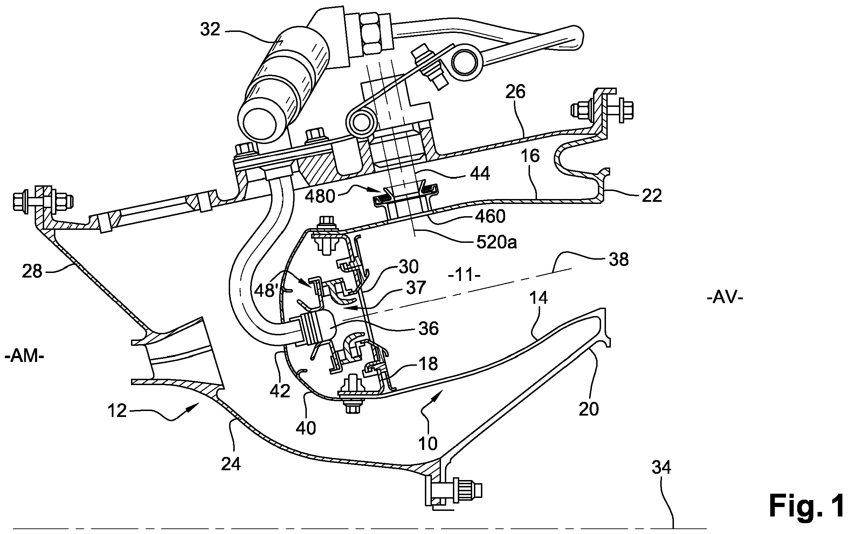

On se réfère d'abord à la figure 1 qui représente une chambre annulaire de combustion 10, pour une turbomachine telle qu'un turboréacteur d'avion, agencée en sortie d'un diffuseur annulaire 12, lui-même situé en sortie d'un compresseur (non représenté). En référence à l'axe 34 (voir ci-après), la chambre 10 comprend une paroi de révolution, ou annulaire, (radialement) interne 14 et une paroi de révolution, ou annulaire, (radialement) externe 16 reliées en amont (AM) à une paroi annulaire 18 de fond de chambre et fixées en aval (AV) par des brides annulaires radialement interne 20 et externe 22 respectivement sur un voile tronconique interne 24 du diffuseur, et sur une extrémité aval d'un carter externe 26 de la chambre, l'extrémité amont de ce carter 26 étant fixée sur un voile tronconique externe 28 du diffuseur. Ainsi, les aspect axiaux, radiaux et amont/aval sont ici appréciés par rapport l'axe 34. Les parois 14,16,18 définissent un volume intérieur 11 de la chambre 10 où s'opère la combustion.

La paroi 18 de fond de chambre comporte des orifices 30 de montage de systèmes 37 d'injection d'un mélange d'air et de carburant dans la chambre 10, l'air provenant du diffuseur 12 et le carburant étant amené par des injecteurs 32. Les injecteurs 32 sont fixés à leurs extrémités radialement externes sur le carter externe 26 et régulièrement répartis sur une circonférence autour de l'axe de révolution 34 de la chambre. Chaque injecteur 32 comprend à son extrémité radialement interne une tête 36 d'injection de carburant qui est guidée dans un système d'injection 37 et qui est alignée avec l'axe 38 d'un des orifices 30 correspondant de la paroi 18 de la chambre, cet axe 38 étant confondu sur le dessin avec l'axe longitudinal de la section de la chambre. L'axe 38 est l'axe suivant lequel s'étendent globalement les parois annulaires interne 14 et externe 16. L'axe 34 de révolution de la chambre de combustion 10 est parallèle à l'axe longitudinal de la turbomachine.

Les axes 34 et 38 sont inclinés l'un par rapport à l'autre suivant un angle aigu qui diverge de l'amont vers l'aval. Ce pourrait être différent.

Un capot annulaire 40 incurvé vers l'amont est fixé sur les extrémités amont des parois 14, 16 et 18 de la chambre et comprend des orifices 42 de passage d'air alignés avec les orifices 30 de la paroi 18 de fond de chambre. Le mélange d'air et de carburant injecté dans la chambre 10 est enflammé au moyen d'au moins une bougie d'allumage 44 qui s'étend radialement à l'extérieur de la chambre. La bougie 44 est guidée à son extrémité radialement interne (par rapport donc à l'axe 34) dans un orifice 460 de la paroi externe 16 de la chambre, et son extrémité radialement externe est fixée par des moyens appropriés sur le carter externe 26 et reliée à des moyens d'alimentation électrique (non représentés) situés à l'extérieur du carter 26. Un dispositif 48 (qui peut être remplacé par celui 480 décrit ci-après) de guidage, suivant l'axe l'axe 52a (respectivement 520a) radial, de l'extrémité radialement interne (par rapport à l'axe 34 ou 38) de la bougie d'allumage 44 est fixé à l'extérieur de la chambre 10 sur la paroi externe 16, autour de l'orifice 46 (respectivement 460) pour compenser les déplacements relatifs entre la paroi externe 16 de la chambre et la bougie 44 portée par le carter 26 pendant le fonctionnement de la turbomachine. Ces déplacements relatifs ont principalement lieu en direction longitudinale, sensiblement parallèlement à l'axe 38.

Un dispositif 48' de guidage de la tête 36 de l'injecteur est également porté par chaque système d'injection 37 monté dans un orifice 30 de la paroi 18 de la chambre, pour compenser les déplacements relatifs entre la chambre et l'injecteur qui ont principalement lieu en direction radiale par rapport à l'axe 38.

On trouve en figure 2 une réalisation conforme à l'art antérieur du/de chaque dispositif de guidage global précité, sous la référence 48, en tant que solution antérieure à celle du dispositif de guidage 480.

Le dispositif de guidage 48 comporte une bague 50 flottante traversée axialement (axe 52a) par la bougie 44 (ou la tête 36 de l'injecteur) et montée à l'intérieur d'une extrémité d'une bride 52 coaxiale. L'autre extrémité de la bride 52 est fixée par brasage, soudage ou analogue sur la paroi externe 16 de la chambre, autour d'un orifice 46 de passage de la bougie (ou fixé sur le système d'injection 37 porté par la paroi 18 de la chambre). La bague 50 comprend une partie cylindrique 54 dont la surface interne 56 entoure avec un faible jeu la bougie 44 (ou la tête 36 de l'injecteur). Cette partie cylindrique 54 est reliée à une extrémité à une partie tronconique 58 évasée vers l'extérieur qui sert au guidage de la bougie (ou de la tête 36 de l'injecteur) lors de son montage dans le dispositif, et comporte à son autre extrémité un rebord annulaire 60. Le rebord annulaire 60 s'étend radialement vers l'extérieur par rapport à l'axe de la bague 50 et qui est guidé dans une gorge annulaire intérieure 62 de la bride 52. La bride 52 comprend deux pièces annulaires 64, 66 coaxiales, respectivement dénommées douille et coupelle, qui sont fixées par brasage ou soudage l'une sur l'autre et qui définissent entre elles la gorge 62, ici annulaire, de guidage du rebord externe 60 de la bague 50. Dans l'exemple représenté, la bride 52 comprend une douille 64 et une coupelle 66. Elles peuvent être chacune annulaires, avec une bride 52 à section sensiblement en S ou en Z en coupe axiale selon l'axe 38.

La douille 64 comprend une paroi cylindrique, ou cheminée, 68 qui est soudée ou brasée à une extrémité sur la paroi 16 (ou sur le système d'injection 37) et qui est reliée à son autre extrémité à une paroi 70 radiale à l'axe 52a et définissant une surface annulaire 72 interne (toujours par rapport à l'axe 34) de la gorge 62. La paroi radiale 70 de la douille 64 est raccordée à sa périphérie externe à un rebord 74 s'étendant du côté opposé à la paroi cylindrique 68 et sur lequel est appliquée et soudée ou brasée la périphérie de la coupelle 66.

Le rebord 74 peut être radial par rapport à l'axe 38 et cylindrique. Il s'apparente à un bord tombé dont la hauteur H1, suivant l'axe 52a, définit ou du moins influe sur la profondeur H2 de la gorge 62, suivant le même axe. Ici, H1= H2.

La coupelle 66 s'étend sensiblement radialement par rapport à l'axe de la douille et définit une autre surface annulaire interne 76 de la gorge 62, cette surface 76 étant parallèle à la surface 72 définie par la première pièce 64 de la bride. Les surfaces annulaires 72, 76 permettent de guider le rebord externe 60 de la bague dans un plan radial ou transversal par rapport à l'axe 52a de la bride. Le diamètre externe du rebord annulaire 60 de la bague 50 est inférieur au diamètre interne du rebord cylindrique 74 de la bride 52 et le diamètre externe de la partie cylindrique 54 de la bague est inférieur au diamètre interne de la coupelle 66 pour autoriser des déplacements du rebord 60 de la bague dans la gorge 62, dans un plan transversal. Dans cette solution, la coupelle 66 a l'aspect d'une rondelle plane. La dimension suivant l'axe 52a, ou épaisseur, du rebord externe 60 de la bague est en outre inférieure à la profondeur H2 de la gorge 62 pour autoriser des décalages angulaires entre les axes de la bague 50 et de la bride 52. Cependant, lors de l'opération de soudage ou de brasage de la périphérie externe de la coupelle 66 sur la paroi 74, de la matière 78 en fusion pénètre, depuis la zone de liaison 80, à l'intérieur de la gorge 62 et vient boucher localement cette gorge sur au moins une partie de son pourtour, ce qui se traduit par une diminution du débattement de la bague 50 en direction transversale dans la gorge.

L'invention permet de remédier à ce problème grâce au soudage ou au brasage de la coupelle et de la douille dans (au moins) une zone espace 881 - voir figure 3 - qui, radialement (par rapport à l'axe 34/38) ou parallèlement audit axe 52a (repéré 520a figure 3)
est décalée vis-à-vis de la direction privilégiée X1,X2 de déplacement du rebord de la bague dans la gorge précitée, pendant le fonctionnement de la chambre de combustion ; voir figure 3 : trajectoire 600a du rebord 600 de la bague 500 quand celle-ci est déplacée, dans la gorge 620, par rapport à la bride 520. Ainsi décalée, la zone 881 est alors éloignée de cette même direction X1,X2.

Dans la solution préférée, et tel qu'illustré figure 3, il est dans ces conditions prévu, parallèlement à l'axe 520a, entre les soudures ou brasures 800 et la trajectoire 600a du rebord 600, qu'une dite zone (ou espace) 881 intermédiaire prolonge périphériquement ladite gorge 620, pour qu'y débordent (en 780) lesdites soudures ou brasures, de sorte que ces soudures ou brasures se situent en dehors de ladite trajectoire 600a, ceci quel que soit le sens le long de la direction privilégiée X1, X2.

Les soudures ou brasures 800 débordent (en 780) uniquement dans ladite zone (ou l'espace) 881 intermédiaire, sans donc déborder dans, et donc empiéter sur, la gorge 620, là où se déplace le rebord 600 selon la trajectoire 600a.

Dans la solution préférée illustrée figure 3, on a référencé identiquement, à un facteur multiplicatif 10 près, les mêmes pièces assurant les mêmes fonctions que celles de la figure 2.

Et on précise ci-après leurs différences structurelles et fonctionnelles.

Dans la réalisation préférée et illustrée figures 3,4, la coupelle plane 66 est remplacée par une coupelle 660 étagée par l'intermédiaire d'un épaulement 661 pourvu d'un rebord 663 externe par lequel la coupelle 660 est brasée ou soudée avec une extrémité 741 axialement allongée (parallèlement à l'axe 520a) de la paroi ou bord tombé 740. La coupelle 66, annulaire, est donc une sorte de rondelle épaulée.

Les débordements de soudure ou de brasure qui pénètrent dans la gorge 620 de la bride 520 et risquaient de la boucher ne vont donc plus limiter les déplacements du rebord 600. Il ne sera donc plus nécessaire de tenir compte de ces débordements dans le dimensionnement de la bride du dispositif de guidage 480.

L'espace 881 intermédiaire qui prolonge ou étend sur ladite gorge 620 entre la/les dites zones 800 et la trajectoire 600a donne à cette gorge une sorte d'incurvation périphérique, créant ainsi un volume annuaire additionnel à celui réservé au déplacement radial à l'axe 520a du rebord 600, où peut déborder la soudure ou brasure.

Dans cette solution préférée, plutôt qu'une forme compliquée donnée à la coupelle 660 (avec par exemple un rebord périphérique orienté, parallèlement à l'axe 520a, vers la paroi 700), il a été ici choisi de créer l'espace 881 par augmentation de la hauteur de la paroi 740. Parallèlement à l'axe 520a, la hauteur H10 de la paroi 740 est égale à la hauteur H30 du débordement 780, augmenté de l'épaisseur du rebord 600 et du jeu J permettant au rebord 600 de se déplacer dans la gorge 620.

Cette augmentation de la hauteur H10 de la paroi 740 par rapport à celle H1 la paroi 74 permet que le débordement de brasage ne soit pas dans la trajectoire 600a.

Dans la solution préférée illustrée figure 3, l'espace 881 s'étend autour d'une partie 665 de la coupelle 660, transversalement audit axe 520a, entre cette partie 665 et la paroi 740 de la bride 520. L'incurvation périphérique est ainsi facilement obtenue.

La/les dites zones 800 de soudure ou de brasure d'où sont issues les débordements 780 peuvent être formées par plusieurs points de soudure ou par un ou plusieurs cordons de soudure.

Toujours dans la réalisation préférée et illustrée figure 3, H10 > H20.

Ceci pourra être atteint, de façon simple, sans avoir à déformer la paroi 740, simplement en l'allongeant, de sorte que H10 > H1, et par l'épaulement 661 de la coupelle 660 prolongé par le rebord externe 663 où la coupelle est donc brasée ou soudée avec l'extrémité 741 de la paroi 740.

Ainsi, l'espace 881 occupe le volume de la gorge 620 situé entre la paroi 740 et la partie 665 de la coupelle 660, en regard donc de l'épaulement 661.

On n'est pas intervenu sur la cheminée 680, ni sur sa fixation en 681 autour de l'orifice 460.

Dans un plan radial ou transversal par rapport à l'axe 520a de la bride, le rebord externe 600 de la bague est maintenant guidé entre la surface interne 760 annulaire de la gorge 620, située à la base de l'épaulement 661, et la surface interne 720 de la paroi 700 de la bride 640. Cette paroi 700, transversale à l'axe 540a, relie la cheminée 680 au bord tombé 740.

La surface interne 760 de la gorge, cette surface 76 étant parallèle Les surfaces annulaires 72, 76 permettent.

On aura également pu noter qu'avec le rebord 663, la solution préférée illustrée figure 3 éloigne de la paroi ou bord tombé 740, transversalement à l'axe 520a, l'épaulement 661, en tant que dite partie 663 de la coupelle. L'espace 881 est ainsi créé.

## Revendications

1. Dispositif de guidage d'un élément (44) dans un orifice (460) d'une paroi de chambre de combustion (10) de turbomachine, le dispositif comprenant une bague (500) flottante et une bride (520) sensiblement coaxiales montées l'une à l'intérieur de l'autre, la bague (500) étant destinée à être traversée axialement (520a) par un élément et comportant un rebord (600) externe guidé transversalement dans une gorge (620) annulaire intérieure de la bride (520), laquelle est destinée à être fixée à un bord de l'orifice (460) de la paroi de la chambre de combustion (10), la bride (520) comprenant une douille (640) pourvue d'un bord tombé (740) où la douille est brasée ou soudée avec une coupelle (660), de façon à définir entre elles ladite gorge (620), le dispositif présentant au moins une direction transversale (X1, X2) privilégiée de déplacement de la bague, dans lequel
- parallèlement audit axe (520a), entre les soudures ou brasures (800) et la trajectoire (600a) du rebord de la bague (500) quand la bague est déplacée par rapport à la douille dans la direction privilégiée, un espace (881) intermédiaire est réservé, en prolongement de ladite gorge (620),
- lesdites soudures ou brasures débordent (780) dans l'espace (881) intermédiaire, de sorte que les soudures ou brasures (800) se situent en dehors de ladite trajectoire du rebord de la bague, **caractérisé en ce que**
- ledit espace (881) intermédiaire s'étend autour d'une partie (665) de la coupelle (660) transversalement audit axe (520a), entre ladite partie (665) de la coupelle et le bord tombé (740).

2. Dispositif de guidage selon la revendication 1 dans lequel, parallèlement audit axe (520a), la hauteur (H10) du bord tombé (740) est au moins égale à la hauteur (H30) du débordement (780) augmenté de l'épaisseur du rebord (600) et d'un jeu J permettant au rebord (600) de se déplacer dans la gorge (620).

3. Dispositif de guidage selon l'une quelconque des revendications précédentes, dans lequel la coupelle (660) est étagée par l'intermédiaire d'un épaulement (660) pourvu d'un rebord (663) externe par lequel la coupelle est brasée ou soudée avec une extrémité (741) axialement allongée du bord tombé (740).

4. Dispositif de guidage selon la revendication 3 dans lequel, transversalement audit axe (520a), le rebord (663) éloigne du bord tombé (740) l'épaulement (661), en tant que dite partie (665) de la coupelle, et créé ainsi ledit espace (881).

5. Chambre de combustion (10) de turbomachine à gaz pour aéronef, la chambre de combustion s'étendant annulairement autour d'un axe (34) et étant pourvue d'un dispositif de guidage selon l'une quelconque des revendications précédentes, lequel définit un guide bougie, l'élément guidé dans l'orifice (460) de ladite paroi (16) de la chambre de combustion étant une bougie qui communique avec un volume intérieur (11) de la chambre de combustion (10) par ledit orifice (460), la paroi (16) dans laquelle l'orifice est formé étant une paroi annulaire radialement externe par rapport audit axe (34).

6. Chambre de combustion (10) selon la revendication 5, qui comprend en outre une paroi annulaire de fond de chambre (18) reliant ladite paroi annulaire radialement externe (16) à une paroi annulaire (14) radialement interne par rapport audit axe (34), ladite paroi annulaire de fond de chambre (18) comportant des orifices (30) de montage de systèmes (37) d'injection d'un mélange d'air et de carburant dans la chambre de combustion.

## Patentansprüche

1. Vorrichtung zum Führen eines Elements (44) in einer Öffnung (460) einer Brennkammerwand (10) einer Turbomaschine, wobei die Vorrichtung einen losen Ring (500) und einen Flansch (520) enthält, die im Wesentlichen koaxial ineinander gelagert sind, wobei der Ring (500) dazu bestimmt ist, axial (520a) von einem Element durchquert zu werden, und eine äußere Kante (600) enthält, die quer in einer inneren ringförmigen Nut (620) des Flansches (520) geführt wird, der dazu bestimmt ist, an einem Rand der Öffnung (460) der Brennkammerwand (10) befestigt zu werden, wobei der Flansch (520) eine Hülse (640) enthält, die mit einem abfallenden Rand (740) versehen ist, an dem die Hülse mit einer Schale (660) verlötet oder verschweißt ist, um zwischen diesen die Nut (620) zu definieren, wobei die Vorrichtung mindestens eine bevorzugte Querrichtung (X1, X2) für die Bewegung des Rings aufweist, wobei:
- parallel zu der Achse (520a) zwischen den Schweiß- oder Lötstellen (800) und der Bahn (600a) der Kante des Rings (500) bei Verlagern des Rings relativ zur Hülse in der bevorzugten Richtung ein Zwischenraum (881) in Verlängerung der Nut (620) frei bleibt,
- die Schweiß- oder Lötstellen in den Zwischenraum (881) überstehen (780), so dass die Schweiß- oder Lötstellen (800) außerhalb der Bahn der Ringkante liegen,
**dadurch gekennzeichnet, dass**
- sich der Zwischenraum (881) um einen Teil (665) der Schale (660) quer zu der Achse (520a) zwischen dem Teil (665) der Schale und dem abfallenden Rand (740) erstreckt.

2. Führungsvorrichtung nach Anspruch 1, wobei parallel zur Achse (520a) die Höhe (H10) des abfallenden Randes (740) mindestens gleich der Höhe (H30) des Überstands (780) plus der Dicke der Kante (600) und eines Spiels J ist, das es der Kante (600) ermöglicht, sich in der Nut (620) zu bewegen.

3. Führungsvorrichtung nach einem der vorhergehenden Ansprüche, wobei die Schale (660) über einen Absatz (660) abgestuft ist, der mit einer äußeren Kante (663) versehen ist, durch welche die Schale mit einem axial verlängerten Ende (741) des abfallenden Randes (740) verlötet oder verschweißt ist.

4. Führungsvorrichtung nach Anspruch 3, wobei quer zu der Achse (520a) die Kante (663) den Absatz (661) als Schalenteil (665) von dem abfallenden Rand (740) wegbewegt und dadurch den Zwischenraum (881) schafft.

5. Brennkammer (10) einer Gasturbomaschine für ein Luftfahrzeug, wobei sich die Brennkammer ringförmig um eine Achse (34) erstreckt und mit einer Führungsvorrichtung nach einem der vorhergehenden Ansprüche versehen ist, die eine Zündkerzenführung definiert, wobei das in der Öffnung (460) der Brennkammerwand (16) geführte Element eine Zündkerze ist, die durch die Öffnung (460) mit einem Innenraum (11) der Brennkammer (10) in Verbindung steht, wobei die Wand (16), in der die Öffnung ausgebildet ist, eine ringförmige Wand ist, die in Bezug auf die Achse (34) radial außen liegt.

6. Brennkammer (10) nach Anspruch 5, ferner enthaltend eine ringförmige Kammerbodenwand (18), die die radial äußere ringförmige Wand (16) mit einer ringförmigen Wand (14) verbindet, die in Bezug auf die Achse (34) radial innen liegt, wobei die ringförmige Kammerbodenwand (18) Öffnungen (30) zur Montage von Systemen (37) zur Einspritzung eines Gemischs aus Luft und Treibstoff in die Brennkammer aufweist.

## Claims

1. A device for guiding an element (44) in an orifice (460) in the wall of a combustion chamber (10) of a turbomachine, the device comprising a floating ring (500) and a flange (520) which are substantially coaxial and mounted one inside the other, the ring (500) being adapted to have an element passing axially (520a) through it and comprising an external rim (600) guided transversely in an internal annular groove (620) of the flange (520), which is adapted to be fixed to an edge of the orifice (460) of the wall of the combustion chamber (10), the flange (520) comprising a bushing (640) provided with a fallen edge (740) where the bushing is brazed or welded with a cup (660), so as to define said groove (620) between them, the device having at least one preferred transverse direction (X1, X2) of movement of the ring, wherein :
- parallel to said axis (520a), between the welds or brazes (800) and the trajectory (600a) of the rim of the ring (500) when the ring is displaced with respect to the bushing in the preferred direction, an intermediate space (881) is reserved, as an extension of said groove (620),
- said welds or brazes protrude (at 780) into the intermediate space (881), so that the welds or brazes (800) are located outside said ring rim trajectory, **characterised in that** said intermediate space (881) extends around a portion (665) of the cup (660) transversely to said axis (520a), between said portion (665) of the cup and the fallen edge (740).

2. The guiding device according to claim 1, wherein, parallel to said axis (520a), the height (H10) of the fallen edge (740) is at least equal to the height (H30) of the protrusion (780) increased by the thickness of the rim (600) and by a clearance J allowing the rim (600) to move in the groove (620).

3. The guiding device according to any one of the foregoing claims, wherein the cup (660) is stepped via a shoulder (660) provided with an external rim (663) by which the cup is brazed or welded with an axially elongated end (741) of the fallen edge (740).

4. The guiding device according to claim 3 wherein, transversely to said axis (520a), the rim (663) sets the shoulder (661), as said portion (665) of the cup, away from the fallen edge (740) and thereby creates said space (881).

5. Combustion chamber (10) of an aircraft gas turbomachine, the combustion chamber extending annularly about an axis (34) and being provided with a guiding device according to any one of the preceding claims, which defines a spark plug guide, the element guided in the orifice (460) of said combustion chamber wall (16) being a spark plug which communicates with an interior volume (11) of the combustion chamber (10) through said orifice (460), the wall (16) in which the orifice is formed being an annular wall radially outer with respect to said axis (34).

6. The combustion chamber (10) according to claim 5, which further comprises an annular chamber bottom wall (18) connecting said radially outer annular wall (16) to an annular wall (14) radially inner with respect to said axis (34), said annular chamber bottom wall (18) having orifices (30) for mounting systems (37) for injecting a mixture of air and fuel into the combustion chamber.
